# EUROPEAN PATENT APPLICATION

(11) **EP 2 868 349 A1**
(43) Date of publication of application: **06.05.2015**
(21) Application number: 13812965.5
(22) Date of filing: 02.07.2013
(51) Int. Cl.: A62B 15/00, E04H 9/00

(54) **SAFETY SHIELD**

(30) Priority: 02.07.2012 KR 20120071836
(71) Applicant: Cho, Je-hwan, Incheon 404-792 (KR)
(72) Inventor: Cho, Je-hwan, Incheon 404-792 (KR)
(74) Representative: Ter Meer Steinmeister & Partner
(86) International application number: PCT/KR2013/005868
(87) International publication number: WO 2014/007523

(57) **Abstract**

The present invention relates to a safety shield for protecting a passenger in an internal space from external physical dangers caused by the occurrence of a disaster, wherein the safety shield comprises an outer appearance unit. The outer appearance unit is made of a material that can shield from and absorb the physical danger. The safety shield can be folded and stored under ordinary circumstances, and the volume of the safety shield can be inflated by air fed in from an air tank upon the occurrence of a disaster so as to form the internal space.

## Description

### [Technical Field]

The present invention relates to a safety shield, and more particularly, to a safety shield that is capable of being changed in volume according to a use environment, and has an advantage in protecting a passenger from external physical danger caused by the occurrence of a disaster.

### [Background Art]

Recently, natural calamities such as floods, earthquakes, and seismic sea waves may result in a number of casualties as well as property damage. In particular, we are not aware when natural calamities occur because the natural calamities are also considered to be natural disasters, and it is urgently required to provide countermeasures in order to minimize damage when the natural calamities occur because they cause terrible damage in an instant.

Therefore, in order to equip large-scale facilities, such as public facilities, with separate protective facilities such as shelters for preparing for natural calamities, laws have also been established to explicitly state the installation of the protective facilities. However, in the case of individual houses, there is a problem in that it is difficult to install separate protective facilities.

Because natural calamities such as floods, earthquakes, and seismic sea waves repeatedly occur and damage due to the natural calamities is gradually spread, instances in which protective facilities for individuals are separately provided have been presented (as a related patent document, there is Korean Patent Application Laid-Open No. 1984-0002508), but because a volume of the protective facility is large, there is a problem in storing the protective facility, and it is difficult to allow the protective facility to universally come into use.

### [Disclosure]

### [Technical Problem]

A technical problem of the present invention is to provide a safety shield which is capable of being changed in volume according to a use environment, such that the safety shield has an advantage in storing and moving the safety shield under ordinary circumstances, and also has an advantage in protecting a passenger from external physical danger caused by the occurrence of a disaster.

In addition, a technical problem to be solved by the present invention is not limited to the aforementioned technical problem, and any other not-mentioned technical problem will be obviously understood from the description below by those skilled in the technical field to which the present invention pertains.

### [Technical Solution]

The aforementioned technical object may be achieved by a safety shield according to the present invention, the safety shield including: an outer appearance unit for protecting a passenger in an internal space from external physical danger caused by the occurrence of a disaster, in which the outer appearance unit is made of a material that blocks and absorbs the physical danger, the outer appearance unit is folded and stored under ordinary circumstances, and a volume of the outer appearance unit is expanded by an air inflow from an air tank at the time of the occurrence of a disaster so as to provide the internal space.

Here, the outer appearance unit may be made of a tarpaulin material formed of synthetic resin fiber of 100 denier or more, and waterproof processing may be performed by coating a surface of the outer appearance unit with poly vinyl chloride (PVC) so as to prevent water from being absorbed into the internal space from the outside.

In addition, the outer appearance unit may be formed of a woven fabric in which two layers of synthetic resin fiber are connected to each other using a plurality of threads, and when air, which is discharged from the air tank when a volume of the outer appearance unit begins to be expanded, flows between the two layers of synthetic resin fiber, a separation distance between the two layers of synthetic resin fiber may determine a thickness of the outer appearance unit.

Meanwhile, the safety shield according to the present invention may further include a cover which is provided on a surface of the outer appearance unit and made of any one of an aramid-based fibrous member and a member having a hard material, in order to prevent the outer appearance unit from being torn or broken.

Furthermore, the safety shield according to the present invention may further include a protection unit which is formed to be spaced apart from the surface of the outer appearance unit at a predetermined distance in order to prevent the outer appearance unit from being torn or broken, and form an air layer between the protection unit and the outer appearance unit when air is discharged from the air tank to increase the volume of the outer appearance unit in order to be expanded.

The safety shield according to the present invention may further include a first support which is provided at a central portion in the outer appearance unit, and supports the central portion in the outer appearance unit by allowing air, which is discharged from the air tank to increase the volume of the outer appearance unit in order to be expanded, to flow to the central portion in the outer appearance unit, thereby assisting in ensuring the internal space of the outer appearance unit.

In addition, the safety shield according to the present invention may further include second supports which are radially provided along an inner surface of the outer appearance unit, and support the outer appearance unit along the inner surface of the outer appearance unit by allowing air, which is discharged from the air tank to increase the volume of the outer appearance unit which is expanded and a shape of the outer appearance unit, and when it is completely expanded, becomes completed, to the inner surface of the outer appearance unit, thereby assisting in ensuring the internal space of the outer appearance unit.

Meanwhile, the safety shield according to the present invention may further include a balance adjusting unit which is made of a material which is increased in weight when the material absorbs water from the outside, in order to prevent the outer appearance unit from being overturned.

In addition, the safety shield according to the present invention may further include a shock absorbing member which is disposed at an upper side of the air tank and the balance adjusting unit and form an inner bottom of the outer appearance unit, in order to provide uniform cushioning characteristics to the passenger, and prevent water absorbed into the balance adjusting unit from being transmitted into the outer appearance unit.

Furthermore, the safety shield according to the present invention may further include an air supply unit which provides air so that the passenger can breathe in the outer appearance unit, the air supply unit may include a filter which filters harmful materials contained in air that flows into the outer appearance unit from the outside, and the safety shield according to the present invention may further include an air purge which discharges air in the outer appearance unit to the outside when an amount of air, which is larger than a predetermined amount, is accommodated in the outer appearance unit.

Meanwhile, the safety shield according to the present invention may further include a fixing unit which fixes the outer appearance unit to an external object, in which the fixing unit includes a plurality of fixing rings which is disposed at predetermined intervals along a surface of the outer appearance unit, and a fixing rope which connects the plurality of fixing rings and fixes the outer appearance unit to the external object.

Furthermore, a surface of the outer appearance unit as described above may be coated with a fluorescent material or a separate warning lamp may be mounted at an upper side of the outer appearance unit so that the outer appearance unit is recognized at night.

### [Advantageous Effects]

The present invention provides the safety shield which may be changed in volume in accordance with a use environment, thereby advantageously storing and moving the safety shield under ordinary circumstances, and may be made of an elastic material, thereby more advantageously protecting the passenger in the safety shield from external physical danger.

Meanwhile, the safety shield including the first support or the second support may allow the volume to be more quickly expanded, may ensure a rigid outer appearance unit, and may include the cover so as to reduce tearing and breakage of the safety shield.

The safety shield including the balance adjusting unit or the fixing unit may ensure safety of the passenger, and the safety shield including the air supply unit may allow the passenger to maintain respiration.

### [Description of Drawings]

FIG. 1 is a perspective view illustrating a first exemplary embodiment of a safety shield according to the present invention.
FIG. 2 is a perspective view illustrating a state in which an entrance unit according to the first exemplary embodiment illustrated in FIG. 1 is opened, and a part of the outer appearance unit is cut out.
FIG. 3 is a cross-sectional view illustrating a process in which air flows in the first exemplary embodiment illustrated in FIG. 1.
FIG. 4 is a perspective view illustrating a second exemplary embodiment of the safety shield according to the present invention.
FIG. 5 is a perspective view illustrating a state in which a part of the outer appearance unit of the second exemplary embodiment illustrated in FIG. 4 is cut out.
FIG. 6 is a cross-sectional view illustrating a process in which air flows in the second exemplary embodiment illustrated in FIG. 4.
FIG. 7 is a bottom view illustrating a state when viewing an upper side in the second exemplary embodiment illustrated in FIG. 4.
FIG. 8 is a perspective view illustrating a modified example of the second exemplary embodiment illustrated in FIG. 4.
FIG. 9 is a cross-sectional view illustrating a process in which air flows in another modified example of the second exemplary embodiment illustrated in FIG. 4.
FIG. 10 is a partial cross-sectional view illustrating an appearance in which the second exemplary embodiment or the modified examples illustrated in FIG. 4 is folded.

### [Best Mode]

Hereinafter, exemplary embodiments of the present invention will be described in detail with reference to the accompanying drawings. However, in the description of the present invention, a description of a function or a configuration, which has been already publicly known, will be omitted in order to make the subject matter of the present invention clear.

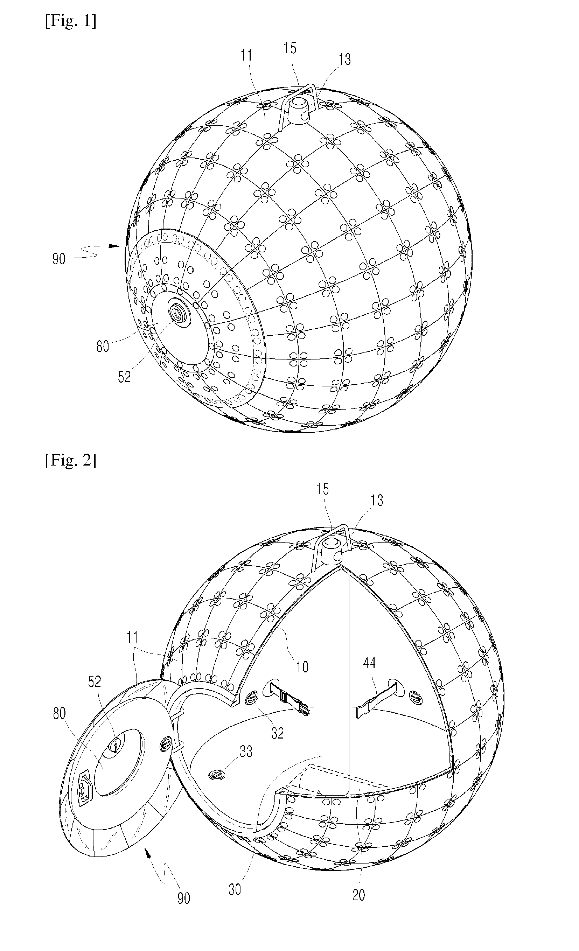

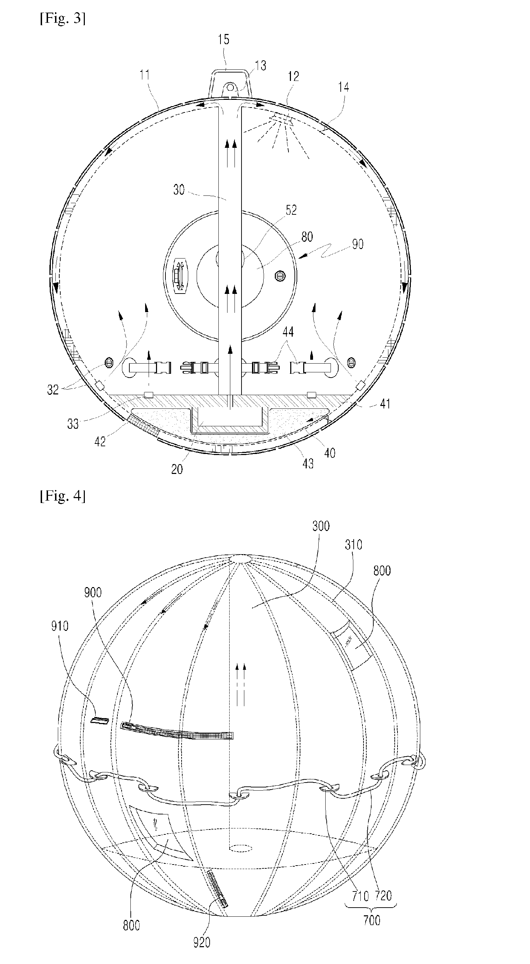

First, a first exemplary embodiment of a safety shield according to the present invention will be described in detail with reference to FIGS. 1 to 3. Here, FIG. 1 is a perspective view illustrating the first exemplary embodiment of the safety shield according to the present invention, FIG. 2 is a perspective view illustrating a state in which an entrance unit according to the first exemplary embodiment illustrated in FIG. 1 is opened, and a part of the outer appearance unit is cut out, and FIG. 3 is a cross-sectional view illustrating a process in which air flows in the first exemplary embodiment illustrated in FIG. 1.

As illustrated in FIGS. 1 to 3, the first exemplary embodiment of the safety shield according to the present invention includes an outer appearance unit 10 which has an internal space formed by separating the inside from the outside, may be made of a material that may block and absorb physical danger, may be folded and stored under ordinary circumstances, and may be expanded in volume due to an air inflow from an air tank at the time of an occurrence of a disaster so as to provide the internal space.

Besides, as can be seen from FIGS. 1 to 3, the first exemplary embodiment of the safety shield according to the present invention may further include a cover 11, an interior lighting device 12, a warning lamp 13, a first control valve 14, a conveying loop 15, an air tank 20, a first support 30, a first inlet valve 32, a second inlet valve 33, a balance adjusting unit 40, a shock absorbing member 41, a water inlet 42, a storage net 43, a safety belt 44, an air flow path 52, an outside monitoring window 80, and an entrance unit 90.

However, among the aforementioned configurations, the configurations, which have the same terms as configurations included in a second exemplary embodiment of the safety shield according to the present invention, are substantially the same as the configurations included in the second exemplary embodiment of the safety shield according to the present invention, and therefore, descriptions of the same configurations will be described in detail in the second exemplary embodiment of the safety shield according to the present invention.

In this case, all of the reference numerals are differently disclosed in the first exemplary embodiment and the second exemplary embodiment in order to distinguish between the first exemplary embodiment and the second exemplary embodiment, but in the case of the configurations which are included in both of the first exemplary embodiment and the second exemplary embodiment, the reference numeral in the first exemplary embodiment becomes identical to the reference numeral in the second exemplary embodiment by adding '0' to the end of the reference numeral in the first exemplary embodiment, such that those skilled in the art will more clearly understand the present invention. (For example, the reference numeral '10' of the "outer appearance unit" in the first exemplary embodiment will change to '100' by adding '0' to the end of the reference numeral '10', and the configuration in the second exemplary embodiment, which corresponds to the reference numeral '100', is the "outer appearance unit" that is substantially the same as the "outer appearance unit" in the first exemplary embodiment.)

Therefore, hereinafter, the conveying loop 15, the first inlet valve 32, the second inlet valve 33, the water inlet 42, the storage net 43, the safety belt 44, and the air flow path 52, which are configurations that cannot be confirmed in the description of the second exemplary embodiment of the safety shield according to the present invention, will be described, and the configurations such as the cover 11 and operations thereof in the first exemplary embodiment, which are different from those in the second exemplary embodiment of the safety shield according to the present invention, will be described.

As described above, the outer appearance unit 10 of the first exemplary embodiment of the present invention may also be made of a material (for example, a synthetic resin fibrous material that is 100 denier or more and has elasticity) which may block and absorb physical danger, but the outer appearance unit 10 may be torn or broken by unexpected large impact or by a very sharp object.

In order to prevent the aforementioned problems, the second exemplary embodiment of the present invention may also further include the cover 11 which is provided on a surface of the outer appearance unit 10, as will be described below.

In this case, the cover 11 may be made of either an aramid-based fibrous member, like the second exemplary embodiment of the present invention, or a member having a hard material, and the cover 11 may be made of a member having polycarbonate which represents the member having a hard material.

In this case, the polycarbonate has impact-resistant, heat-resistant, weather- resistant, self-extinguishing, and transparent characteristics, and has impact property that is about 150 or more times more improved than a tempered glass, such that the polycarbonate has an advantage in forming the cover 11 because the polycarbonate is excellent in terms of flexibility and workability.

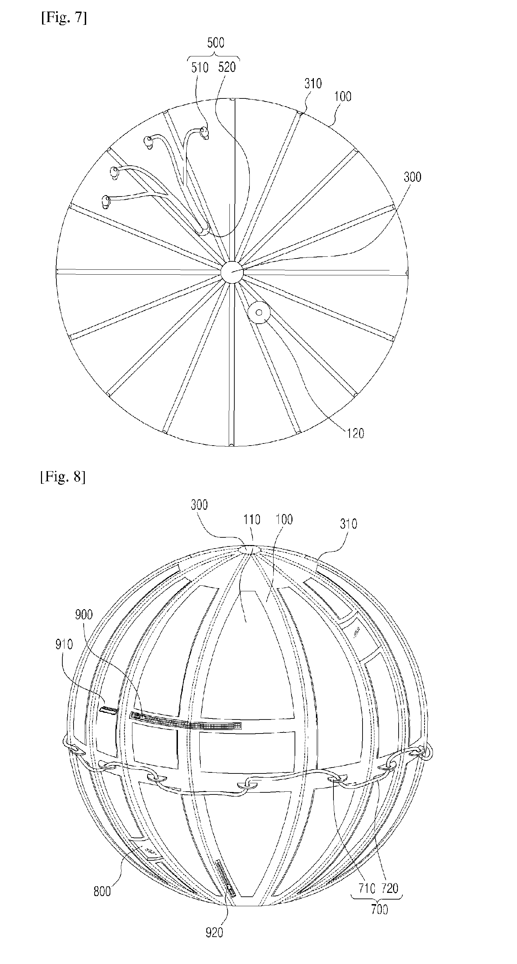

In addition, the cover 11 may be formed to be large as illustrated in FIG. 8 that illustrates a modified example of the second exemplary embodiment of the present invention, or the cover 11 may also be formed to be small as illustrated in FIGS. 1 and 2 that illustrate the first exemplary embodiment of the present invention. That is, the size of the cover 11 does not limit the scope of the present invention.

Meanwhile, like the second exemplary embodiment of the present invention, at an upper side of the outer appearance unit 10, the warning lamp 13 may be provided, and the conveying loop 15 may also be additionally provided. In this case, the conveying loop 15 is a portion to which a rescue rope (not illustrated) is mounted in order to draw and move the first exemplary embodiment of the present invention to the shore or the land using a ship or a helicopter when the first exemplary embodiment of the present invention floats on the sea or the river.

Meanwhile, the entrance unit 90 may be formed in a portion of the outer appearance unit 10 like the second exemplary embodiment of the present invention, but the entrance unit 90 is formed in the form of a door, unlike the second exemplary embodiment of the present invention, and the outside monitoring window 80 and the air flow path 52, which are formed in the outer appearance unit 10 of the second exemplary embodiment of the present invention, is provided in the entrance unit 90.

That is, the entrance unit 90 of the first exemplary embodiment of the present invention is separately manufactured as an entrance door in the form of a door, and the entrance door may be hingedly connected with the outer appearance unit 10 so as to manufacture the first exemplary embodiment of the present invention. In this case, unlike the second exemplary embodiment of the present invention in which the outside monitoring window 800 is separately formed in the outer appearance unit 100, the outside monitoring window 80 is included in the entrance door that is separately manufactured, thereby providing manufacturing convenience.

In consideration of the manufacturing convenience, in order to substitute the air supply unit 500 of the second exemplary embodiment of the present invention, the air flow path 52 may also be formed at the entrance door in the form of a door which constitutes the entrance unit 90. That is, the air flow path 52 serves to prevent any problems when a user breathes even if the user is in the first exemplary embodiment of the present invention for a long period of time.

Meanwhile, the entrance unit 90, which is different from that of the second exemplary embodiment of the present invention, appears to be positioned at a central portion of the outer appearance unit 10 in FIGS. 1 to 3, and the entrance unit 90 is illustrated to be significantly large, but this illustration is just an example for showing one example, and the position and the size of the entrance unit 90 may of course be changed.

Meanwhile, the first exemplary embodiment of the present invention may further include the first inlet valve 32, and the second inlet valve 33. Here, the first inlet valve 32 and the second inlet valve 33 serve to allow the first exemplary embodiment of the present invention, which is folded when not used, to be quickly unfolded so that the user may quickly enter the first exemplary embodiment of the present invention.

That is, like the second exemplary embodiment of the present invention, the first exemplary embodiment of the present invention also forms the internal space in a short time using a first support 300 and a second support 310, but unlike the second exemplary embodiment of the present invention, the first inlet valve 32 and the second inlet valve 33 are also opened to provide air directly to the internal space, and as a result, the first exemplary embodiment of the present invention may form the internal space within a shorter amount of time.

In this case, shapes, structures, numbers, and the like of the first inlet valve 32 and the second inlet valve 33 may be varied in accordance with a size or a manufacturing cost of the first exemplary embodiment of the present invention as much as needed, and of course does not limit the scope of the present invention.

Meanwhile, since air needs to be provided to the internal space of the first exemplary embodiment of the present invention through the first inlet valve 32 and the second inlet valve 33, it can be expected that a capacity of the air tank 20 needs to become greater than that of the second exemplary embodiment of the present invention.

However, unlike the second exemplary embodiment of the present invention, the air flow path 52 is formed instead of the air supply unit 500, and air, which is provided to the air tank 20, is used only to unfold the first exemplary embodiment of the present invention that is folded when not used, such that the air tank 20 may be configured to be smaller than that of the second exemplary embodiment of the present invention.

Of course, the capacity of the air tank 20 also does not limit the scope of the present invention, and the purpose of the aforementioned contents is to assist those skilled in the art in more clearly understanding the present invention through the present specification.

Meanwhile, the first exemplary embodiment of the present invention may further include the water inlet 42, and the storage net 43.

Here, the water inlet 42 is a configuration that allows sea water or river water to flow thereinto in order to perform a function of the balance adjusting unit 40, and may be configured to have a shape formed by opening a part of the outer appearance unit 10, but may be formed in the form of a mesh that covers an opened part of the outer appearance unit 10 in order to prevent damage to the storage net 43 that will be described below.

Meanwhile, the storage net 43 is a configuration that serves to prevent particulate materials from escaping the water inlet 42 in a case in which the balance adjusting unit 40 is configured with the particulate materials instead of a porous material that will be mentioned as an example in the second exemplary embodiment of the present invention.

In this case, the particulate materials, which constitute the balance adjusting unit 40, are not limited. That is, any material may be used as long as the material may contain water to increase a weight thereof, and perform a function of the balance adjusting unit 40 that adjusts a balance of the first exemplary embodiment of the present invention.

Meanwhile, the first exemplary embodiment of the present invention may further additionally include the safety belt 44. In a case in which the first exemplary embodiment of the present invention rattles due to external force or is overturned in some cases, the safety belt 44 serves to prevent a plurality of users accommodated in the first exemplary embodiment of the present invention from colliding with each other and being injured, and performs a great role in providing the user with psychological stability.

As described above, and as can be seen from the drawings, the first exemplary embodiment of the present invention and the second exemplary embodiment of the present invention have slightly different configurations. The aforementioned difference in the configurations may be changed as much as needed by those skilled in the art within the scope of the claims of the present invention, and both of the first exemplary embodiment of the present invention and the second exemplary embodiment of the present invention have substantially the same technical spirit, and may solve the problems mentioned in the Background Art section by the technical spirit, and thus both of the first exemplary embodiment of the present invention and the second exemplary embodiment of the present invention of course belong to the scope of the present invention.

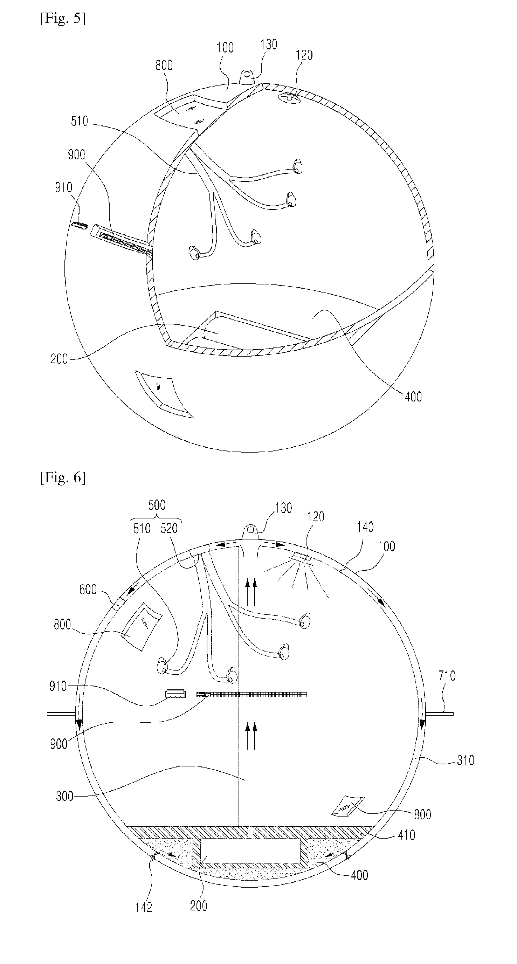

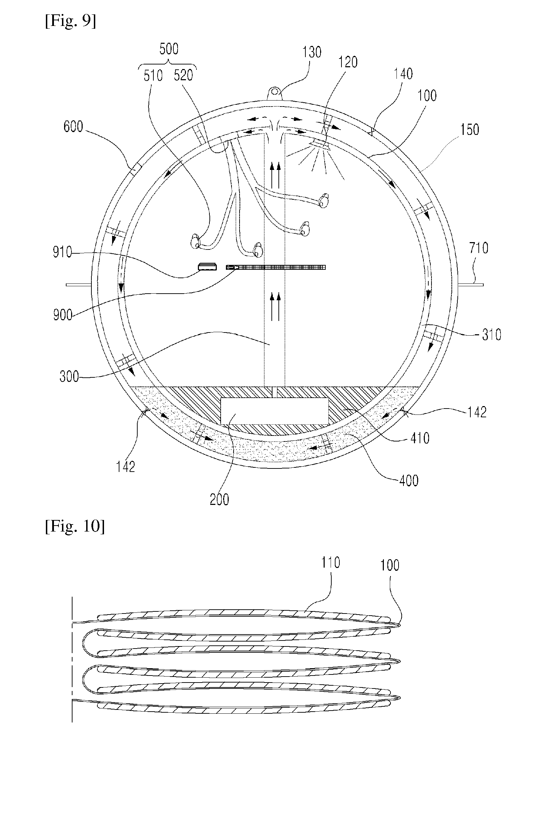

Next, the second exemplary embodiment of the safety shield according to the present invention and modified examples thereof will be described in detail with reference to FIGS. 4 to 10. Here, FIG. 4 is a perspective view illustrating a second exemplary embodiment of the safety shield according to the present invention, FIG. 5 is a perspective view illustrating a state in which a part of the outer appearance unit of the second exemplary embodiment illustrated in FIG. 4 is cut out, FIG. 6 is a cross-sectional view illustrating a process in which air flows in the second exemplary embodiment illustrated in FIG. 4, and FIG. 7 is a bottom view illustrating a state when viewing an upper side in the second exemplary embodiment illustrated in FIG. 4. In addition, FIG. 8 is a perspective view illustrating a modified example of the second exemplary embodiment illustrated in FIG. 4, and FIG. 9 is a cross-sectional view illustrating a process in which air flows in another modified example of the second exemplary embodiment illustrated in FIG. 4. Meanwhile, FIG. 10 is a partial cross-sectional view illustrating an appearance in which the second exemplary embodiment or the modified examples illustrated in FIG. 4 is folded.

As illustrated in FIGS. 4 to 10, and as illustrated in the drawings, the safety shield according to the second exemplary embodiment of the present invention includes an outer appearance unit 100 which may have an internal space formed by separating the inside from the outside.

The outer appearance unit 100 is a portion for protecting a passenger in the internal space from external physical danger caused by the occurrence of a disaster, and is made of a material that is elastically deformed and elastically restored so as to block or absorb physical danger such as impact.

Here, a disaster means a situation that may occur due to an abnormal natural phenomenon such as earthquakes, floods, and seismic sea waves, or an artificial accident such as a collapsing building, and sinking of a ship, and may cause serious damage to a certain degree because it is hard to control the disaster with human power. In particular, in the case of a seismic sea wave called a tsunami, extreme physical danger occurs within a short time, and as a result, the configuration of the outer appearance unit 100 is important.

Hereinafter, the configuration of the safety shield according to the second exemplary embodiment of the present invention, which includes the outer appearance unit 100, will be described regarding the disaster caused by a seismic sea wave such as a tsunami, or flood damage caused by a flood as an example, but the present invention is not naturally limited to flood damage, and the outer appearance unit 100 may be formed to be suitable to protect the passenger from a risk of being buried because of fragments of buildings at the time of the occurrence of a disaster such as a collapsing building, and the safety shield according to the second exemplary embodiment of the present invention is also configured to protect the passenger, and thus the scope of the present invention is not limited to the disaster caused by a seismic sea wave such as a tsunami, or flood damage such as a flood.

Meanwhile, the physical danger means all physical dangerous factors that may threaten the safety of the passenger, and may include dangerous factors caused by various reasons such as impact due to fragments of destroyed buildings, or a risk of being submerged due to floods or seismic sea waves.

Of course, the outer appearance unit 100 according to the second exemplary embodiment may have other shapes in accordance with a use environment, as long as the outer appearance unit 100 may protect the passenger in the internal space from the external physical danger caused by the occurrence of a disaster.

Meanwhile, since the outer appearance unit 100 is made of an elastic material, the outer appearance unit 100 may be folded and stored because air does not flow into the outer appearance unit 100 under ordinary circumstances in which the disaster does not occur such that it is not necessary to provide the internal space in which the passenger may be accommodated.

However, in a case in which the disaster occurs and the internal space, in which the passenger may take shelter from the physical danger, needs to be provided, air flows into the outer appearance unit 100 from the air tank 200, to increase a volume of the outer appearance unit 100 in order to be expanded.

That is, the safety shield according to the second exemplary embodiment of the present invention may form the internal space, which is provided to allow the passenger to be sheltered from the disaster, only in as case to allow air to flow into the outer appearance unit 100 from the air tank 200.

Unlike the second exemplary embodiment of the present invention, if the outer appearance unit 100 is made of a material such as a hard material which is difficult to be folded, a predetermined volume needs to be maintained in order to provide a space in which the passenger may take shelter regardless of whether the disaster occurs.

In the case of the safety shield 1000 including the outer appearance unit 100 made of a hard material, there is no great problem when the number of passengers in the safety shield is small and the size of the safety shield is small, but it may be difficult to store the safety shield because a predetermined volume needs to be maintained when the number of passengers in the safety shield 100 is increased and it is necessary to increase the size of the safety shield.

In contrast, like the present exemplary embodiment, in a case in which the outer appearance unit 100 is made of an elastic material and a volume of the outer appearance unit 100 may be changed in accordance with a use environment, the outer appearance unit 100 may have a small volume, and as a result, there is an advantage in storing and moving the outer appearance unit 100.

That is, the internal space may be provided by easily expanding a volume of the outer appearance unit 100 using the air tank 200 in a short time at the time of the occurrence of a disaster, and under ordinary circumstances, air does not flow into the outer appearance unit 100 in order to store the outer appearance unit 100, such that the outer appearance unit 100 with minimized volume may be folded and stored.

The drawing associated with the aforementioned configuration is illustrated in FIG. 10.

FIG. 10 is a view illustrating an appearance in which the second exemplary embodiment of the present invention, which further has the cover 110 formed on a surface of the outer appearance unit 100 in accordance with an modified example of the present invention which will be described in detail, is folded and stored.

As illustrated in FIG. 10, the volume of the second exemplary embodiment of the present invention is reduced, and the second exemplary embodiment may be folded and stored, such that the second exemplary embodiment may be easily stored, and it is also convenient to move the second exemplary embodiment in a state in which the second exemplary embodiment is stored.

The air tank 200 includes compressed air, and supplies air into the outer appearance unit 100 according to the second exemplary embodiment of the present invention so as to expand the outer appearance unit 100 in a shorter time, and allows the passenger to be sheltered from the disaster.

In addition, according to the second exemplary embodiment of the present invention, air required to allow the passenger in the outer appearance unit 100 to breathe may be supplied.

Meanwhile, the outer appearance unit 100 according to the present exemplary embodiment may be formed in various shapes, but may be formed in a spherical shape, for example, as illustrated in the accompanying drawings, so as to minimize impact from external physical danger, and smoothly and quickly expand the volume thereof in accordance with an air inflow.

However, as described above, because the spherical outer appearance unit 100 is just an example, and the outer appearance unit 100 may be formed in various shapes, the shape of the outer appearance unit 100 does not limit the scope of the present invention.

In this case, the outer appearance unit 100, which is provided in accordance with the present exemplary embodiment, may be made of a tarpaulin material having synthetic resin fiber of 100 denier or more.

The tarpaulin material may be suitable as a material for the shield for protecting the passenger as described in the present exemplary embodiment because the tarpaulin material is excellent in terms of waterproof property and mechanical strength. In addition, since the tarpaulin material has synthetic resin fiber of 100 denier or more, higher mechanical strength may be ensured, and as a result, there is an advantage in protecting the passenger from external physical danger caused by the occurrence of a disaster.

However, the outer appearance unit 100, which is made of the tarpaulin material having synthetic fiber of 100 denier or more as described above, is just an example, but in addition to the tarpaulin material having synthetic fiber of 100 denier or more, any material may be applied to the outer appearance unit 100 according to the present invention as long as the material may ensure elasticity and mechanical strength and is also excellent in waterproofing property so as to sufficiently protect the passenger from external physical danger.

In this case, regarding the outer appearance unit 100 according to the present exemplary embodiment, waterproof processing may be performed to further improve the waterproofing property by preventing outside water from being absorbed into the outer appearance unit 100. The waterproof processing may be performed by coating the surface of the outer appearance unit 100 with poly vinyl chloride (PVC), and it is apparent that in addition to the poly vinyl chloride, the outer appearance unit 100 may be coated with a material that may ensure sufficient waterproofing property.

Meanwhile, the safety shield 1000 according to the present exemplary embodiment may further include the first support 300.

The first support 300 is provided at a central portion in the outer appearance unit 100, and connected with the air tank 200, so as to allow air to flow concentratedly to the central portion in the outer appearance unit 100 when the volume of the outer appearance unit 100 begins to be expanded as air discharged from the air tank 200 flows into the outer appearance unit 100, thereby supporting the central portion of the outer appearance unit 100.

For example, the first support 300 according to the second exemplary embodiment of the present invention may be an air column provided in the outer appearance unit 100. Therefore, the first support 300 supports the outer appearance unit 100 using pressure of air that flows from the air tank 200, thereby assisting in ensuring a space in the outer appearance unit 100.

That is, in a case in which air flows into the first support 300, and at the same time, air is supplied into the outer appearance unit 100 so as to increase the volume of the outer appearance unit 100, the internal space may be more quickly ensured, in comparison with a case in which the volume is expanded by supplying air only into the outer appearance unit 100.

Thus, the passenger may more quickly take shelter in the internal space of the outer appearance unit 100, and may be protected from the external physical danger. In addition, since the outer appearance unit 100 is supported by the first support 300, the more rigid outer appearance unit 100 may be ensured.

In addition, the safety shield 1000 according to the present exemplary embodiment may include the second supports 310.

The second supports 310 are radially provided along an inner surface of the outer appearance unit 100, and connected with the air tank 200 so as to allow air from the air tank 200 to flow concentratedly to the inner surface of the outer appearance unit 100 when the volume of the outer appearance unit 100 is expanded as air flows into the outer appearance unit 100 and the shape of the outer appearance unit 100, which is completely expanded, becomes completed, thereby supporting the outer appearance unit 100 at the inner surface of the outer appearance unit 100, and assisting in ensuring the internal space of the outer appearance unit 100.

For example, the second supports 310 according to the second exemplary embodiment of the present invention may be air flow paths that are radially provided along the inner surface of the outer appearance unit 100, or may have a loop shape.

The plurality of second supports 310 is radially disposed along the inner surface of the outer appearance unit 100, and air flows into the second supports 310 from the air tank 200 for each second support 310, such that the outer appearance unit 100 is supported by pressure of the flowing air, thereby assisting in ensuring the internal space of the outer appearance unit 100.

That is, like the first support 300, in a case in which air flows into the second support 310, and at the same time, air is supplied into the outer appearance unit 100 so as to expand the volume of the outer appearance unit 100, the internal space may be more quickly ensured, in comparison with a case in which the volume is expanded by supplying air only into the outer appearance unit 100.

The second exemplary embodiment of the present invention may include only the first support 300, may include only the second support 310, or may include both of the first support 300 and the second support 310. The respective effects according to the configurations may be identical or similar to the aforementioned effects.

In addition, in a case in which the second exemplary embodiment includes both of the first support 300 and the second support 310, the first support 300 and the second support 310 may be connected to each other so that air may flow into both of the first support 300 and the second support 310 from the air tank 200.

Meanwhile, as a modified example according to the second exemplary embodiment of the present invention, the safety shield may further include the cover 110.

The cover 110 serves to reinforce mechanical strength of the surface of the outer appearance unit 100, is provided on the surface of the outer appearance unit 100, and prevents the outer appearance unit 100 from being torn or broken by an external sharp object.

The cover 110 according to the modified example may be made of at least one of aramid-based fiber or a hard material.

Because the aramid-based fiber is excellent in mechanical strength to such an extent that the aramid-based fiber is mainly used as a material for products in aerospace or military fields, the aramid-based fiber has an advantage in protecting the outer appearance unit 100 according to the present exemplary embodiment from the external physical danger.

The hard material may include a natural material such as bamboo as well as an artificial material such as synthetic resin or a tempered glass. Because the hard material may also not be easily penetrated or broken by the sharp object outside the outer appearance unit 100, the hard material has an advantageous in preventing the outer appearance unit 100 from being torn or broken by the sharp object.

There is no limitation to the material of the cover 110 as described above, and there is also no limitation to a shape of the cover 110. That is, the cover may have a plate shape as illustrated in the drawings, but the cover may be in the form of a mesh, or may have a coated shape.

In this case, in a case in which the cover 110 according to the present exemplary embodiment is divided into one piece or pieces having a predetermined or greater size, the cover is similar to the safety shield 1000 on which the outer appearance unit 100 is provided as the hard material as described above. That is, it may be slightly difficult to carry out the safety shield 1000 that may be folded and stored.

For this reason, in the case of the safety shield 1000 on which the cover 110 is provided in accordance with the present exemplary embodiment, the cover 110 may be divided into pieces having a small size, a predetermined size or less (this is similar to the aforementioned first exemplary embodiment).

In a case in which the cover 110 is divided into pieces having a predetermined size or less, air in the outer appearance unit 100 is discharged and the volume is reduced, such that the safety shield may still be folded and stored as illustrated in FIG. 10.

Meanwhile, the safety shield 1000 according to the second exemplary embodiment of the present invention may further include the balance adjusting unit 400.

The balance adjusting unit 400 is provided to prevent the outer appearance unit 100 from being overturned by various external physical danger at the time of the occurrence of a disaster, and prevent the passenger in the outer appearance unit 100 from being injured.

In a case in which the outer appearance unit 100 is provided in a spherical shape according to the second exemplary embodiment of the present invention, the outer appearance unit 100 may be overturned or may roll while performing rotational motion due to a flow of a fluid such as wind or water, or other external force, and in a case in which the outer appearance unit 100 is excessively moved accordingly, the passenger in the outer appearance unit 100 may be injured as described above, and the outer appearance unit 100 is damaged, and as a result, there may cause a problem such as the passenger being exposed to danger.

In order to prevent the problem from occurring, the balance adjusting unit 400 having a heavy weight is provided so as to adjust a balance of the safety shield, and the balance adjusting unit 400, which is provided in accordance with the second exemplary embodiment of the present invention, does not always have a heavy weight, but may be made of a material which is increased in weight when the material is wet with water so as to advantageously store and move the safety shield.

For example, the balance adjusting unit 400 may be made of a porous material, and in this case, hollow holes formed in the porous material are filled with air under ordinary circumstances such that the porous material has a light weight, but when the porous material is wet with water, the hollow holes are filled with water, such that the weight of the porous material may be increased by the weight of water received in the hollow holes.

Therefore, the balance adjusting unit 400 according to the second exemplary embodiment of the present invention is present in a light state under ordinary circumstances so as to easily store and move the safety shield, but at the time of the occurrence of a disaster such as flood damage, the balance adjusting unit 400 absorbs water present outside the balance adjusting unit 400 so as to increase the weight thereof, thereby adjusting an overall balance of the safety shield 1000.

As the porous material, cotton or sponge is used, and in addition to the cotton or the sponge, various examples, such as a material formed by foam-molding synthetic resin, may be applied. Therefore, the scope of the present invention regarding the porous material is exhibited by a shape of the porous material, and the scope of the present invention is not limited to a specific material.

The balance adjusting unit 400 of the second exemplary embodiment of the present invention may be provided at a lower end of the outer appearance unit 100 together with the air tank 200.

Since the air tank 200 according to the second exemplary embodiment of the present invention needs to accommodate compressed air at a very high pressure, the air tank 200 includes a container which is made of a metallic material and has a thick inner wall so as to withstand high pressure.

Therefore, the air tank 200 may also have a considerably heavy weight, and the air tank 200 may adjust the balance of the safety shield 1000 together with the balance adjusting unit 400 using the weight of the air tank 200.

However, this is just an example according to the present exemplary embodiment, and the air tank 200, which has a configuration that stores air and then discharges air, may be included in the scope of the present invention. In addition, a configuration such as an air blower which does not store air, but may allow air to flow in from the outside and may supply air into the outer appearance unit 100 may be applied.

In this case, the balance adjusting unit 400 and the air tank 200 according to the present exemplary embodiment may be disposed at the lower end of the outer appearance unit 100 in order to adjust the balance of the safety shield 1000.

In this case, the air tank 200 is disposed at a center of the lower end of the outer appearance unit 100, and the balance adjusting unit 400 is disposed to surround the air tank 200, such that weights thereof may be uniformly distributed, thereby more advantageously adjusting the balance of the safety shield 1000.

Meanwhile, since the balance adjusting unit 400 and the air tank 200, which are made of different materials, are disposed at the lower end of the outer appearance unit 100 and form a bottom in the outer appearance unit 100, the passenger may feel safely assured when the passenger enters the outer appearance unit 100 due to the somewhat different bottom.

Therefore, as illustrated in FIG. 5, the safety shield 1000 according to the present exemplary embodiment may further include a shock absorbing member 410.

The shock absorbing member 410 is disposed at an upper side of the balance adjusting unit 400 and the air tank 200, and form the inner bottom of the outer appearance unit 100, such that the bottom having a uniform material may be provided to the passenger so as to easily provide cushioning characteristics to the passenger, and it is possible to prevent water absorbed into the balance adjusting unit 400, which absorbs water so as to increase the weight thereof, from being transmitted to the inside of the outer appearance unit 100.

Meanwhile, since the safety shield may be exposed to various environments at the time of the occurrence of a disaster, the outer appearance unit 100 according to the present exemplary embodiment may be completely sealed in order to prevent various dangerous factors, such as water, flame, dust, and toxic gas which may threaten safety of the passenger, from flowing into the safety shield 1000.

In this case, the passenger in the outer appearance unit 100 needs to breathe to maintain life, air, which may constantly flow into the outer appearance unit 100, needs to be ensured in order to allow the passenger to breathe.

Therefore, the safety shield 1000 according to the present exemplary embodiment may further include the air supply unit 500. The air supply unit 500 serves to provide air so that the passenger in the outer appearance unit 100 may maintain respiration.

The air supply unit 500 according to the second exemplary embodiment of the present invention may include respiratory hoses 510. In this case, the respiratory hose 510 is connected with the air tank 200 provided in the outer appearance unit 100 so as to supply air, and a mask may be mounted at an end of the respiratory hose 510 so as to assist the passenger in breathing so that the passenger may more easily breathe.

In addition, the air supply unit 500 according to the second exemplary embodiment of the present invention may include a filter 520. In this case, the filter 520 is a part that filters harmful materials contained in air that flows into the outer appearance unit 100 from the outside.

As described above, at the time of the occurrence of a disaster, harmful materials such as dust and toxic gas, which may threaten safety of the passenger through the respiration, may be contained in outside air. Since safety of the passenger cannot be properly protected when the passenger inhales the harmful material, the filter 520 may be further provided on a path through which air flows into the outer appearance unit 100 from the outside in order to filter and remove the harmful material.

In addition, the air supply unit 500 according to the second exemplary embodiment of the present invention may further include an air purge 600. The air purge 600 is a kind of pump that is minutely opened and closed so as to allow air to pass therethrough, and is a pump for discharging a part of air present in the outer appearance unit 100 to the outside.

In a case in which an amount of air, which is larger than a predetermined amount, is accommodated in the outer appearance unit 100, a risk that the outer appearance unit 100 will be damaged despite small external impact is increased. Therefore, some of the air is discharged to the outside when air pressure in the outer appearance unit 100 is too high, thereby reducing a risk of damage to the outer appearance unit 100.

In addition, carbon dioxide, which is generated when the passenger breathes, may be discharged to the outside, thereby preventing the passenger from being exposed to carbon dioxide in high concentration amounts even though the passenger is accommodated in the outer appearance unit 100 for a somewhat long period of time, and allowing the passenger to maintain respiration.

Meanwhile, the safety shield 1000 according to the present exemplary embodiment may further include a fixing unit 700. The fixing unit 700 is a part that fixes the outer appearance unit 100 to an external object, and may ensure safety by preventing the safety shield 1000 according to the present exemplary embodiment from being swept away by external force such as water or wind that is generated from the outside.

In this case, the fixing unit 700 may include a plurality of fixing rings 710 which is disposed at predetermined intervals along the surface of the outer appearance unit 100, and a fixing rope 720 which connects the plurality of fixing rings 710 and may fix the outer appearance unit 100 to an external object.

The external object means an object such as an outer wall of a building or a column, which is not likely to be moved even at the time of the occurrence of a disaster, that is, an object to which the safety shield 1000 of the present exemplary embodiment may be fixed so as not to be moved.

In a case in which the safety shield 1000 is fixed using the fixing unit 700 like the second exemplary embodiment of the present invention, the safety shield 1000 does not rattle and move in accordance with an outside environment, thereby more advantageously ensure safety of the passenger in the safety shield 1000.

In addition, the safety shield 1000 according to the present exemplary embodiment may further include an outside monitoring window 800 which is made of a transparent material so that the passenger in the outer appearance unit 100 may monitor an outside situation.

In addition, an entrance unit 900, which is openably and closably coupled to the outer appearance unit 100, may be provided in order to allow the passenger to enter and escape from the sealed outer appearance unit 100. The entrance unit 900 may be provided as a waterproof zipper in order to prevent water from flowing into the outer appearance unit from the outside.

In this case, a handle 910 may be provided at the periphery of the entrance unit 900 in order to easily open and close the entrance unit 900 by temporarily fixing the outer appearance unit 100 made of an elastic material.

In a case in which the handle 910 is provided at the periphery of the entrance unit 900, the outer appearance unit 100 is temporarily fixed, and the safety shield 1000 is prevented from being moved when external force for opening and closing the entrance unit 900 is applied in a case in which the safety shield 1000 has a spherical shape like the second exemplary embodiment of the present invention, thereby allowing the passenger to more quickly enter the outer appearance unit 100.

In addition, the safety shield 1000 according to the second exemplary embodiment of the present invention may further include an auxiliary zipper 920 even at the balance adjusting unit 400.

The auxiliary zipper serves to open the balance adjusting unit 400, which is in a dried state under ordinary circumstances, but absorbs water at the time of the occurrence of a disaster so as to increase the weight thereof, and to allow water to flow into the balance adjusting unit 400.

Meanwhile, in a case in which the outer appearance unit 100 according to the second exemplary embodiment of the present invention is made of an opaque material, it may be difficult to ensure visibility of the passenger in the outer appearance unit 100. In order to prevent the aforementioned difficulty, an interior lighting device 120 may be further provided.

In addition, a warning lamp 130 may be further provided on the surface of the safety shield so that a request for rescue may be transmitted to the outside. The warning lamp 130 may be mounted outside the outer appearance unit 100, and may transmit a rescue signal using a visual effect such as light. At the time of the occurrence of a disaster, the safety shield may be buried in building debris and various types of debris that have been carried by water, and the passenger's life may be threatened in a case in which the safety shield is left alone for a long time.

Therefore, the warning lamp 130 is mounted outside the outer appearance unit so as to transmit a rescue signal, thereby raising a probability of rescue and preserving the passenger's life, and furthermore, the warning lamp 130 serves to inform a third party of a position of the safety shield at night. Of course, the warning lamp 130 may be substituted by coating the outer appearance unit 100 with a fluorescent material.

Meanwhile, a first control valve 140 is a valve which is provided in the outer appearance unit 100, and automatically controls the discharge of air, thereby adjusting pressure in the outer appearance unit 100. The first control valve 140 may further reduce a risk that the outer appearance unit 100 will be damaged as pressure in the outer appearance unit 100 is excessively increased.

Meanwhile, FIG. 9 is a view illustrating another modified example of the second exemplary embodiment of the present invention, and as illustrated in FIG. 9, the safety shield according to another modified example of the second exemplary embodiment may further include a protection unit 150.

The protection unit 150 is disposed outside the outer appearance unit 100 so as to be spaced apart from the surface of the outer appearance unit 100 at a predetermined distance, and provided to protect the outer appearance unit 100. As illustrated in FIG. 7, the protection unit 150 is provided to have a single membrane structure, and a portion between the protection unit 150 and the outer appearance unit 100 is filled with air, thereby protecting the outer appearance unit 100.

In this case, an auxiliary membrane, through which air may pass, may be further provided between the protection unit 150 and the outer appearance unit 100, and the auxiliary membrane may divide the portion between the protection unit 150 and the outer appearance unit 100 into a plurality of regions.

The air passing through the auxiliary membrane is closed when the portion between the protection unit 150 and the outer appearance unit 100 is completely filled with air, thereby making the plurality of divided region as sealed spaces. Therefore, in a case in which the protection unit 150 is torn or broken due to external impact, only a part of the plurality of regions is damaged, thereby more advantageously protecting the outer appearance unit 100 and the passenger in the outer appearance unit 100.

The protection unit 150 may be provided to have a double-membrane structure that may be filled with air, in consideration of a relationship with the outer appearance unit 100.

That is, according to another modified example of the second exemplary embodiment, the first support 300 may be extended to the protection unit 150, and air, which has been discharged from the air tank 200, may pass through the first support 300, and then may be supplied to the second support 310 and the protection unit 150.

In this case, similar to the aforementioned configuration, an auxiliary membrane is provided between the protection unit 150 and the outer appearance unit 100, and a portion between the protection unit 150 and the outer appearance unit 100 may be filled with air, thereby more advantageously protecting the outer appearance unit 100.

The protection unit 150, which is filled with air, forms dual air layers together with an air layer provided between the protection unit 150 and the outer appearance unit 100, a shock absorbing effect, which mitigates external physical danger when the external physical danger is applied, is excellent, and there is an advantage in protecting the outer appearance unit 100 and safety of the passenger in the outer appearance unit 100.

Like the outer appearance unit 100, the protection unit 150 according to the present exemplary embodiment may be made of an elastic material, and for example, may be made of a tarpaulin material. In addition, waterproof processing with PVC is identically performed on the surface of the protection unit 150.

In addition, as another example, the protection unit 150 according to the present exemplary embodiment may be made of any one of aramid-based fiber and a hard material, like the cover 110. By these materials, the protection unit may be protected from external danger as described above, and descriptions of other configurations may be the same as the description of the second exemplary embodiment.

Meanwhile, the safety shield, in which the protection unit 150 according to the present modified example is provided, may further include first control valves 140 and second control valves 142 that are provided in the protection unit 150, respectively.

The first control valve 140 is provided in the protection unit 150 and discharges air accommodated between the protection unit 150 and the outer appearance unit 100 so as to automatically adjust pressure, and a plurality of first control valves 140 is provided, and another first control valve 140 is provided in the outer appearance unit 100 and discharged air in the outer appearance unit 100 so as to automatically adjust pressure in the outer appearance unit 100 as described above.

The second control valve 142 may be provided at a portion of the protection unit 150 which is connected with the balance adjusting unit 400. In this case, unlike the first control valve 140, the second control valve 142 serves to allow water to flow from the outside, and to automatically supply water to the balance adjusting unit 400.

As described above, the safety shield according to various exemplary embodiments and modified examples according to the present invention, which includes an outer appearance unit 100 that may be made of an elastic material, may be folded and stored, and may provide the internal space by an air inflow, has been described in detail.

As described above, the safety shield according to the present invention may be changed in volume in accordance with a use environment, thereby advantageously storing and moving the safety shield under ordinary circumstances. Therefore, the safety shield according to the present invention may widely circulate the safety shield in preparation of a large-scale natural calamity.

In addition, the safety shield is made of an elastic material, thereby more advantageously protecting the passenger in the safety shield from external physical danger.

Meanwhile, since the first support 300 or the second support 310 is provided, the volume may be more quickly expanded, and a rigid outer appearance unit 100 may be ensured, thereby reducing tearing or breakage of the safety shield using the cover 110.

A center of gravity is ensured due to the balance adjusting unit 400, thereby ensuring safety of the passenger, and the passenger may maintain respiration using the air supply unit 500. In addition, the safety shield is fixed using the fixing unit 700, thereby ensuring safety of the passenger as described above.

While the specific exemplary embodiments of the present invention have been described above and illustrated, it is apparent to those skilled in the art that the present invention described above is not limited to the disclosed exemplary embodiment, and various modifications and alterations may be made without departing from the spirit and the scope of the present invention. Therefore, the modifications or the alterations should not be appreciated individually from the technical spirit of prospect of the present invention, and the modified exemplary embodiment belong to the scope of the claims of the present invention.

## Claims

1. A safety shield comprising: an outer appearance unit for protecting a passenger in an internal space from external physical danger caused by the occurrence of a disaster, wherein the outer appearance unit is made of a material that blocks and absorbs the physical danger, the outer appearance unit is folded and stored under ordinary circumstances, and a volume of the outer appearance unit is expanded by an air inflow from an air tank at the time of the occurrence of a disaster so as to provide the internal space.

2. The safety shield of claim 1, wherein the outer appearance unit is made of a tarpaulin material formed of synthetic resin fiber of 100 denier or more.

3. The safety shield of claim 2, wherein waterproof processing is performed by coating a surface of the outer appearance unit with poly vinyl chloride (PVC) so as to prevent water from being absorbed into the internal space from the outside.

4. The safety shield of claim 1, wherein the outer appearance unit is formed of a woven fabric in which two layers of synthetic resin fiber are connected to each other using a plurality of threads, and when air, which is discharged from the air tank when a volume of the outer appearance unit begins to be expanded, flows between the two layers of synthetic resin fiber, a separation distance between the two layers of synthetic resin fiber determines a thickness of the outer appearance unit.

5. The safety shield of claim 1, further comprising:
a cover which is provided on a surface of the outer appearance unit and made of any one of an aramid-based fibrous member and a member having a hard material, in order to prevent the outer appearance unit from being torn or broken.

6. The safety shield of claim 1, further comprising:
a protection unit which is formed to be spaced apart from the surface of the outer appearance unit at a predetermined distance in order to prevent the outer appearance unit from being torn or broken, and form an air layer between the protection unit and the outer appearance unit when air is discharged from the air tank increases the volume of the outer appearance unit in order to be expanded.

7. The safety shield of claim 1, further comprising:
a first support which is provided at a central portion in the outer appearance unit, and supports the central portion in the outer appearance unit by allowing air, which is discharged from the air tank when the volume of the outer appearance unit begins to be expanded, to flow to the central portion in the outer appearance unit, thereby assisting in ensuring the internal space of the outer appearance unit.

8. The safety shield of claim 1, further comprising:
second supports which are radially provided along an inner surface of the outer appearance unit, and support the outer appearance unit along the inner surface of the outer appearance unit by allowing air, which is discharged from the air tank when the volume of the outer appearance unit is expanded and a shape of the outer appearance unit, which is completely expanded, becomes completed, to the inner surface of the outer appearance unit, thereby assisting in ensuring the internal space of the outer appearance unit.

9. The safety shield of claim 1, further comprising:
a balance adjusting unit which is made of a material which is increased in weight when the material absorbs water from the outside, in order to prevent the outer appearance unit from being overturned.

10. The safety shield of claim 9, further comprising:
a shock absorbing member which is disposed at an upper side of the air tank and the balance adjusting unit and form an inner bottom of the outer appearance unit, in order to provide uniform cushioning characteristics to the passenger, and prevent water absorbed into the balance adjusting unit from being transmitted into the outer appearance unit.

11. The safety shield of claim 1, further comprising:
an air supply unit which provides air so that the passenger breathes in the outer appearance unit.

12. The safety shield of claim 11, wherein the air supply unit includes a filter which filters harmful materials contained in air that flows into the outer appearance unit from the outside.

13. The safety shield of claim 11, further comprising:
an air purge which discharges air in the outer appearance unit to the outside when an amount of air, which is larger than a predetermined amount, is accommodated in the outer appearance unit.

14. The safety shield of claim 1, further comprising:
a fixing unit which fixes the outer appearance unit to an external object,
wherein the fixing unit includes a plurality of fixing rings which is disposed at predetermined intervals along a surface of the outer appearance unit, and a fixing rope which connects the plurality of fixing rings and fixes the outer appearance unit to the external object.

15. The safety shield of claim 1, wherein a surface of the outer appearance unit is coated with a fluorescent material or a separate warning lamp is mounted at an upper side of the outer appearance unit so that the outer appearance unit is recognized at night.
